# EUROPEAN PATENT APPLICATION

(11) **EP 3 726 378 A1**
(43) Date of publication of application: **21.10.2020**
(21) Application number: 19793314.6
(22) Date of filing: 25.04.2019
(51) Int. Cl.: G06F 9/445

(54) **APPLICATION PROGRAM PRE-LOADING METHOD AND APPARATUS, AND STORAGE MEDIUM AND TERMINAL**

(30) Priority: 28.04.2018 CN 201810400917
(71) Applicant: GUANGDONG OPPO MOBILE TELECOMMUNICATIONS CORP., LTD., Wusha, Chang'an Town Dongguan, Guangdong 523860 (CN)
(72) Inventor: HUANG, Su, Dongguan, Guangdong 523860 (CN)
(74) Representative: Manitz Finsterwald Patent- und Rechtsanwaltspartnerschaft mbB
(86) International application number: PCT/CN2019/084218
(87) International publication number: WO 2019/206213

(57) **Abstract**

A method and an apparatus for preloading an application, a storage medium, and a terminal are provided. The method comprises the following. Target information of a preset application is acquired in response to detecting that the preset application is running in a foreground, where the preset application includes a social application, and the target information is associated with interaction of the preset application. An application to be preloaded is determined according to the target information. The application to be preloaded is preloaded.

## Description

### CROSS-REFERENCE TO RELATED APPLICATIONS

This application claims priority to Chinese Patent Application No. 201810400917.9, filed on April 28, 2018, the disclosure of which is hereby incorporated by reference in its entirety.

### TECHNICAL FIELD

The present disclosure relates to the technical field of application loading, and particularly to a method and an apparatus for preloading an application, a storage medium, and a terminal.

### BACKGROUND

At present, terminals such as smart phones, tablets, notebook computers, and smart household appliances have become indispensable electronic devices in people's daily life. As terminal devices are increasingly more intelligent, most terminal devices are loaded with operating systems which enable the terminal devices to install a variety of applications to meet different user's needs.

With configuration improvement of the terminal device, dozens or even hundreds of applications can be installed in most terminal devices. As the function of the application becomes increasingly diversified, an increasing number of resources need to be loaded when the application is running. When a user chooses to launch an application, the terminal will load resources required for the application to be launched. After the loading is completed, the terminal enters an initial interface of the application. The whole process usually takes several seconds or even more than ten seconds, which results in low launching efficiency and thus needs to be improved.

### SUMMARY

Implementations provide a method and an apparatus for preloading an application, a storage medium, and a terminal, which can optimize an application loading solution.

According to a first aspect, a method for preloading an application is provided. The method includes the following. Target information of a preset application is acquired in response to detecting that the preset application is running in a foreground, where the preset application includes a social application, and the target information is associated with interaction of the preset application. An application to be preloaded is determined according to the target information. The application to be preloaded is preloaded.

According to a second aspect, an apparatus for preloading an application is provided. The apparatus for preloading an application includes a foreground application detecting module, a target information acquiring module, and a preloading module.

The foreground application detecting module is configured to detect whether a preset application is running in a foreground, where the preset application includes a social application.

The target information acquiring module is configured to acquiring target information of the preset application in response to detecting that the preset application is running in the foreground, where the target information is associated with interaction of the preset application.

The preloading module is configured to determine, according to the target information, an application to be preloaded, and preload the application to be preloaded.

According to a third aspect, a computer-readable storage medium is provided. The computer-readable storage medium is configured to store computer programs which, when executed by a processor, are operable with the processor to execute the method for preloading an application in the first aspect.

According to a fourth aspect, a terminal is provided. The terminal includes a memory, a processor, and computer programs which are stored in the memory and operable with the processor. The computer programs, when executed by the processor, are operable with the processor to execute the method for preloading an application in the first aspect.

### BRIEF DESCRIPTION OF DRAWINGS

FIG. 1 is a flowchart illustrating a method for preloading an application according to implementations.
FIG. 2 is a diagram illustrating a relative positional relationship between an active-window stack for preloading and a display area of a display screen according to implementations.
FIG. 3 is a diagram illustrating a relative positional relationship between an active-window stack for preloading and a display area of a display screen according to other implementations.
FIG. 4 is a flowchart illustrating a method for preloading an application according to other implementations.
FIG. 5 is a flowchart illustrating a method for preloading an application according to yet other implementations.
FIG. 6 is a diagram illustrating a display interface of a quick launch entry according to implementations.
FIG. 7 is a block diagram illustrating an apparatus for preloading an application according to implementations.
FIG. 8 is a block diagram illustrating a terminal according to implementations.
FIG. 9 is a block diagram illustrating a terminal according to other implementations.

### DETAILED DESCRIPTION

Technical solutions of the present disclosure will be further described below through implementations with reference to the accompanying drawings. It will be appreciated that the implementations described herein are merely for the purpose of explanation rather than restriction of the disclosure. In addition, for the convenience of description, only some structures related to the present disclosure, rather than all structures, are illustrated in the accompanying drawings.

Before discussing the exemplary implementations in more detail, it should be noted that some exemplary implementations are described as processes or methods illustrated in flowcharts. In the flowchart, although steps are depicted as being processed sequentially, some of these steps can be performed in parallel, concurrently, or simultaneously. In addition, the order of the steps can be rearranged. The process ends when operations of the steps are completed, however, additional steps that are not illustrated in the accompanying drawings may still be performed. The process can correspond to a method, a function, a procedure, a subroutine, a subprogram, and the like.

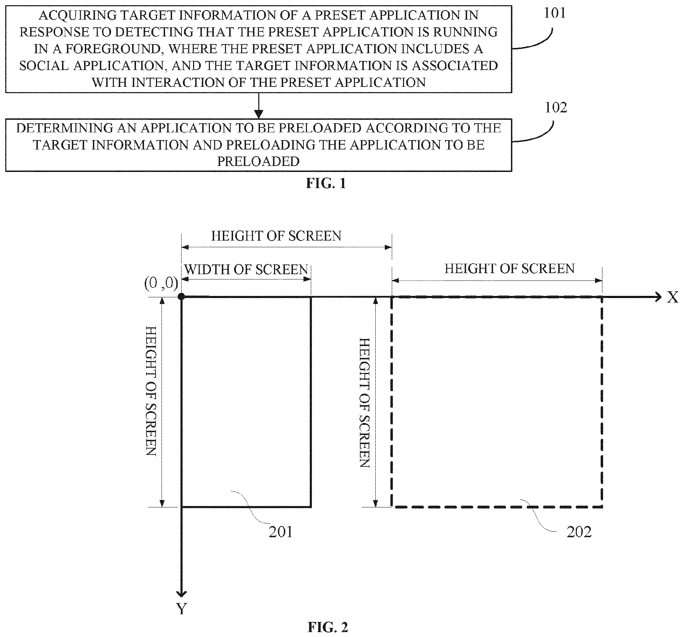

FIG. 1 is a flowchart illustrating a method for preloading an application according to an aspect of the present disclosure. The method can be implemented by an apparatus for preloading an application. The apparatus can be implemented by software and/or hardware and can be generally integrated into a terminal. As illustrated in FIG. 1, the method includes the following.

At block 101, target information of a preset application is acquired in response to detecting that the preset application is running in a foreground, where the preset application includes a social application (e.g. the preset application can be a social application), and the target information is associated with interaction of the preset application.

As an implementation, the terminal provided herein can include a terminal device such as a mobile phone, a tablet computer, a notebook computer, a smart household appliance, and the like. The terminal is loaded with an operating system.

As an implementation, the preset application includes a social application, such as a chat application such as WeChat™ or QQ™, or an application which has a message exchange function such as Alipay™ or Taobao™. Terminal designers can add social attribute tags to applications on the market, and a system can determine whether an application is a social application according to the social attribute tag thereof. If the application is a social application, it is determined that the application can be preloaded through the preloading function provided herein. In addition, after the terminal leaves the factory, a social attribute tag can also be set for a new on-line application and provided to the terminal, to update, in the terminal, applications that support the preloading function.

As an implementation, a preloading function option can be added to the terminal, and the user can choose whether to enable preloading functions of applications which support the preloading function one by one or all at once. Generally, when a main switch in the preloading function option is turned on, the system enables by default preloading functions of all applications installed in the terminal that support the preloading function. For example, when the user turns on the main switch for the preloading function, check boxes for all applications currently installed in the terminal that support the preloading function are selected, and the user can uncheck a check box of an application for which the user does not want to enable the preloading function.

As an implementation, the preset application herein includes a social application for which the preloading function enabled. The preset application may include one or more applications. As an implementation, an application list is generated according to identities of applications with the preloading function enabled. When an application is running in the foreground, the identity of the application is obtained to determine whether the identity is included in the above application list. If the identity is included in the application list, determine that the preset application is running in the foreground.

As an implementation, the target information includes at least one of an interactive object and interactive content. The interactive object can include other object(s) that are interacting with the current user, such as the user's friend or customer service. The interactive content can include messages, files (such as documents, pictures, videos, or compressed packages, etc.), webpage links, and transfer amount interacted between the user and an interactive object. The interactive content can be sent from the user to the interactive object, or can be sent from the interactive object to the user. Generally, the interactive content can be expressed in items, for example, a message is one item, and similarly, a picture is one item. The interactive content can include items currently interacted, such as a text message or a picture that the user just sent to the interactive object (and the interactive object has not yet replied), a string that the user is entering in a text box, or a message that the interactive object sent recently, etc. In this way, it is possible to predict the application to be preloaded in time. In addition, the interactive content can also include contents interacted within a preset time period back from the current moment, or a preset number of interactive items back from the content currently interacted. As such, a correlation between the interactive content and an application can be analyzed according to the context, so as to predict more accurately the application to be preloaded which has a high correlation with the interactive content.

At block 102, an application to be preloaded is determined according to the target information, and the application to be preloaded is preloaded.

As an implementation, usage habits of the user can be collected when the preset application is in use. For example, the usage habits can include which application is launched during information interaction with an interactive object, or an application is launched when certain information is interacted. Gather collected information to summarize a regularity, or train a preset model, so that when the user uses the preset application next time, which application(s) may be opened by the user can be predicted according to the interactive object and/or the interactive content (that is, at least one of the interactive object and the interactive content). Such application(s) is determined as the application to be preloaded, and the application to be preloaded is preloaded.

In implementations, when there is only one application to be preloaded, there is no need to consider an order of preloading of the application ("preloading order" for short). When there are multiple applications to be preloaded, for each of the multiple applications to be preloaded, it can be determined as a current application to be preloaded, and the multiple applications are preloaded in turn. Alternatively, two or more applications to be preloaded can also be determined as current applications to be pre loaded and then the two or more applications are preloaded simultaneously, that is, preloading of multiple applications can be performed in parallel.

The preloading process and resources to be loaded are not limited herein. As an implementation, corresponding hardware resources can be allocated to the application to be preloaded, and related data required for launching can be loaded based on the allocated hardware resources. As an implementation, application process launching, application service launching, memory allocation, file content reading, network data acquisition, interface rendering, and the like can be included. In addition, the resources to be preloaded can be determined according to the type of the application to be preloaded. For example, when the application to be preloaded is a social application, a launching screen, a contact list, and recent message records of the application to be preloaded can be preloaded; when the application to be preloaded is a game application, data related to a game background and the like of the application to be preloaded can be preloaded.

According to the method for preloading an application provided in implementations, when the preset application is detected to be running in a foreground, at least one of the interactive object and the interactive content of the preset application is acquired. The application to be preloaded is determined according to the target information and preloaded. By means of the above technical solution, an application that the user is about to open can be predicted according to the interactive object or interactive content corresponding to the social application, which currently being operated by the user, and then the predicted application is preloaded, which will lead to a prediction result with high accuracy and increase launching speed of the application to be preloaded.

As an implementation, the target information includes an interactive object, and the application to be preloaded is determined according to the target information as follows. A first application prediction model is obtained by training according to a regularity of applications opened during interaction with the interactive object via the preset application within a first preset historical period. The interactive object is input into the first application prediction model. The application to be preloaded is determined according to an output of the first application prediction model. As such, an application that the user is about to launch can be predicted accurately with aid of a prediction model, and high prediction accuracy can be achieved.

For example, when the user chat with friend A in WeChat™, the user often goes to application a to find articles or screenshots and share them with friend A. Then when it is detected that the user is chatting with friend A in WeChat™, application a is determined to be an application to be preloaded and then preloaded. As another example, when the user discuss problems with colleague B in a company's internal chat application, the user often goes to application b to find relevant information or reports and send them to colleague B. Then when it is detected that the user is interacting with colleague B in the company's internal chat application, application b is determined as the application to be preloaded and preloaded. These above examples are provided for illustration purpose only. In actual implementation, an improved model can be used to achieve a corresponding effect according to actual needs.

The "first preset historical period" referred to herein may be a period from a moment when the preset application is installed to the current moment. The first preset historical period may also be a period of time (such as one month) back from the current moment. The first prediction model can be a statistical model or a machine-learning model. An algorithm adopted can include recurrent neural networks (RNN), long short-term memory (LSTM) networks, gated recurrent unit (GRU), simple recurrent unit (SRU), auto encoder, decision tree, random forest, feature mean classification, classification and regression tree, hidden Markov model, K-nearest neighbor (KNN) algorithm, logistic regression model, Bayesian model, Gaussian model, Kullback-Leibler (KL) divergence, and the like.

During model training, sample elements that can be input can include the name or an identity of the application that is opened by the user during information interaction with the current interactive object via the preset application. The sample elements can further include the number of times that an application is opened, a frequency at which the application is opened, or a time interval from a moment when the user start the information interaction with the current interactive object to the moment when the application to be preloaded is launched, and the like. As an implementation, an appropriate sample element(s) can be selected according to a selected model, a model can also be selected according to a selected sample element(s), or a model and a sample element(s) can be selected based on requirements on prediction accuracy and prediction speed, and the like.

As an implementation, the target information includes interactive content. The application to be preloaded is determined according to the target information as follows. The interactive content is identified for a preset keyword, where the preset keyword is associated with an application name or an application function. The application to be preloaded is determined according to the identified preset keyword. As such, there is no need to train a model in advance, and the application to be preloaded can be predicted quickly through analysis of the current interactive content.

For example, when the user uses WeChat™, "what is your Alipay balance" appears in a message sent by the interactive object. The terminal can recognize that the interactive content contains the application name "Alipay", then it can be predicted that the user will open Alipay™ to check the balance, and accordingly, Alipay™ can be determined as the application to be preloaded.

In this situation, generally, the user will return to a desktop to find an application icon for Alipay™ (e.g. operation (such as a click operation) on the application icon for Alipay™ may allow Alipay™ to be launched) and then click the application icon for Alipay™. This process usually takes a few seconds, and the terminal can preload Alipay™ during these seconds. In this way, after the user clicks the application icon for Alipay™, Alipay™ can be launched quickly thereby improving launching speed and reducing waiting time of the user. As another example, when the user purchases a train ticket through a ticket purchase application and uses Alipay™ for payment, after an event such as refund occurs, the user may consult with a customer service through Alipay™ for refund matters. When content sent by the customer service contains "please provide your order number", the terminal will recognize an application function of "ticket purchase", and then determine an application with a ticket purchase function installed in the terminal as the application to be preloaded. Similarly, when the user actually opens the application for ticket purchase, the application has been preloaded and can be launched quickly. When multiple applications with a ticket purchase function are installed in the terminal, the multiple applications can be determined as applications to be preloaded and preloaded.

As an implementation, the target information includes interactive content. The application to be preloaded is determined according to the target information as follows. A second application prediction model is obtained by training according to a regularity of applications opened after the interactive content appears during interaction with another user via the preset application within a second preset historical period. The interactive content is input into the second application prediction model. The application to be preloaded is determined according to an output of the second application prediction model. As such, an application can be predicted more accurately according to the interactive content.

The second preset historical period here may be the same as or different from the first preset historical period above. For example, the second application prediction model can be a statistical model or a machine-learning model. An algorithm adopted can include RNN, LSTM networks, GRU, SRU, auto encoder, decision tree, random forest, feature mean classification, classification and regression tree, hidden Markov model, KNN algorithm, logistic regression model, Bayesian model, Gaussian model, KL divergence, and the like. During model training, sample elements that can be input can include the name or an identity of the application that is opened by the user after the interactive content appears during information interaction with another user via the preset application. The sample elements can further include the number of times that an application is opened or a frequency at which the application is opened after the interactive content appears. During model training, all information of the interactive content in the second preset historical period can be input into the model to be trained, or information of interest may be extracted from the interactive content and then input into the model to be trained. As an implementation, an appropriate sample element(s) can be selected according to a selected model, a model can also be selected according to a selected sample element(s), or a model and a sample element(s) can be selected based on requirements on prediction accuracy and prediction speed, and the like.

As an implementation, the target information includes an interactive object and interactive content. The application to be preloaded is determined according to the target information as follows. A third application prediction model is obtained by training according to a regularity of applications opened after the interactive content appears during interaction with the interactive object via the preset application within a third preset historical period. The interactive object and the interactive content are input into the third application prediction model. The application to be preloaded is determined according to an output of the third application prediction model. As such, the application to be preloaded can be predicted more accurately based on the interactive object and interactive content, and a hit rate of an application to be preloaded can be improved.

The third preset historical period herein may be the same as or different from the first preset historical period or the second preset historical period above. For example, the third application prediction model can be a statistical model or a machine-learning model. An algorithm adopted can include RNN, LSTM networks, GRU, SRU, auto encoder, decision tree, random forest, feature mean classification, classification and regression tree, hidden Markov model, KNN algorithm, logistic regression model, Bayesian model, Gaussian model, KL divergence, and the like. During model training, sample elements that can be input can include the name or an identity of the application opened by the user during information interaction with the current interactive object via the preset application. The sample elements can further include the number of times that an application is opened, a frequency at which the application is opened, time length when the application is opened since the user starts the information interaction with the current interactive objective, the name or an identity of the application that is opened by the user after the interactive content appears during the information interaction with another user via the preset application, and the like. During model training, all information of the interactive content in the third preset historical period can be input into the model to be trained, or information of interest may be extracted from the interactive content in the third preset historical period and then input into the model to be trained. As an implementation, an appropriate sample element(s) can be selected according to a selected model, a model can also be selected according to a selected sample element(s), or a model and a sample element(s) can be selected based on requirements on prediction accuracy and prediction speed, and the like.

As an implementation, the method further includes the following after the application to be preloaded is preloaded. Provide the user with a quick launch entry for a preloaded application. When the quick launch entry is triggered by the user in a preset manner, launch the preloaded application. In this way, the user does not need to return to the desktop to search for a desktop icon of the application to be opened, in contrast, the user can start the application directly through the quick launch entry. As an implementation, the quick launch entry for the application to be preloaded can be displayed in a form of a floating window, a popup window, or a fixed display area on the display screen. The quick launch entry can display the name or icon of the application to be preloaded, and so on. When there are multiple applications to be preloaded, quick launch entries can be displayed one by one in a certain order, or two or more quick launch entries can be displayed all at once (that is, the number of quick launch entries displayed each time is greater than or equal to 2). The preset manner can include but is not limited to click, long press, or double click.

As an implementation, the application to be preloaded is preloaded as follows. An application interface of the application to be preloaded is preloaded according to a pre-established active-window stack for preloading. The active-window stack for preloading has boundary coordinates out of a coordinate range of a display screen. As such, with preloading of the application interface, preparation before launching the application can be completed to a great extent and launching speed of the preloaded application can be increased without interfering with display of contents of the application running in the foreground on the display screen.

In implementations, an active-window can be understood as a separate interface that provides interaction and operation directly to the user. The interface can be named differently in different operating systems. To facilitate understanding, Android™ operating system is taken as an example in the following.

In Android™ system, the active-window is named "Activity". Activity is a component responsible for interacting with the user. Activity provides a screen (which can be understood as a screen interface rather than a physical display screen) for interaction of the user to complete a certain task. In an Android™ application, Activity is usually a separate screen on which some controls can be displayed, and the separate screen can also monitor and handle events of the user. In the management of Activity, there are two concepts: Task (task stack) and Stack (active-window stack). Task corresponds to an application and is configured to store Activity. One or more Activities can be stored in one Task, and these Activities follow a principle of "first in, last out; last in, first out". Stack is configured to manage Task. In general, one Stack manages Task(s) to which each Activity to be displayed on one screen belongs, and one Stack can manage one or more Tasks. The Stack also follows basic management principles of stacks. The screen described herein is not necessarily a complete and separate display screen. Taking "two screens" as an example, the two screens can be two areas in a complete display screen, which display their respective contents separately. The "two screens" can also be two separate display screens when the terminal has two or even more than two separate display screens.

In Android™ system, a multi-window mode is supported, and the multi-window mode can include a split-screen mode, a picture-in-picture mode, and a free mode (that is, FreeForm). In the multi-window mode, the Stack corresponding to the application can have its own size and can have a top coordinate, a bottom coordinate, a left coordinate, and a right coordinate in a coordinate system with the top left corner of the terminal screen as the origin. For example, boundaries of a rectangle are generally described by (a, b, c, d) and can be represented by coordinates of the top left corner and coordinates of the bottom right corner of the rectangle. The coordinate of the top left corner is (a, b) and the coordinate of the bottom right corner is (c, d). Such a rectangular area corresponds to the size of the Stack. An in-application layout in the Stack is based on the size of the Stack, that is, the application interface corresponding to the Activity is displayed within the bounds defined by the size.

In the multi-window mode, multiple applications can be allowed to be visible (to the system and the user or to the system only). When an application is visible to the system and the user, it means that the application is displayed on the display screen and the user can see it. When an application is visible to the system only, it means that the application is only visible to the operating system and invisible to the user, for example, the application may be occluded by a foreground application, or displayed outside the display screen as implemented herein.

In implementations, the application interface of the application to be preloaded can be preloaded outside the display screen according to a multi-window mechanism of the operating system. With the multi-window mechanism, the size corresponding to the application can be set outside the display screen to achieve the purpose of invisible to the user, whereby display content of the foreground application on the display screen will not be affected.

In the multi-window mode, there can be multiple types of Stacks, such as Home Stack, APP Stack, other split-screen Stacks, and the like. The Home Stack represents a stack for display of desktop applications. The App Stack represents a stack for display of third-party applications. In implementations, an active-window stack for preloading (that is, preloading Stack) is added, which represents a stack for display of a preloaded application. The boundary coordinates of the preloading Stack are set outside the coordinate range of the display screen, and the application to be preloaded can be displayed on the Stack. For Android™ system, a new Stack dedicated for display of preloaded applications can be established according to the multi-window mechanism of Android™ system. In implementations, the reason for which the new Stack is established is that the new preloading Stack established can have its own size and visibility, thus achieving the purpose of preloading outside the display screen.

In implementations, regarding the time when the preloading Stack is established, the preloading Stack can be set to be permanent by default before the terminal is shipped, that is, the preloading Stack always exists. The preloading Stack can also be established after the terminal is turned on or unlocked. As another implementation, the preloading Stack can be established after the event of application preloading is triggered (before the application to be preloaded is determined), and the like. As an implementation, the application interface of the application to be preloaded is preloaded according to the pre-established active-window stack for preloading as follows. Existence of the pre-established active-window stack for preloading is determined. When the pre-established active-window stack for preloading is absent (e.g. does not exist), an active-window stack for preloading is established according to a preset principle. The application interface of the application to be preloaded is preloaded according to the established active-window stack for preloading. In this way, after the application to be preloaded is determined, whether the preloading Stack exists is further determined. If a preloading Stack exists, there is no need to establish a new stack, and if not, the preloading Stack is established, as such, system resources can be saved. As an implementation, when there are multiple applications to be preloaded, that is, when multiple applications to be preloaded need to be preloaded continuously in a short time period, since the preloading stack is established before the first application to be preloaded starts to be preloaded, and the preloading stack exists before the second application to be preloaded starts to be preloaded, therefore, there is no need to determine existence of the preloading Stack.

In implementations, in the process of preloading the application interface of the application to be preloaded according to the preloading Stack, the application interface can be graphed (e.g. drawn) and displayed according to a size of the preloading Stack.

In some implementations, the application interface of the application to be preloaded is preloaded according to the pre-established active-window stack for preloading as follows. A target process for the application to be preloaded is established. A task stack for the application to be preloaded is established in the pre-established active-window stack for preloading. An active-window corresponding to the application to be preloaded is launched in the task stack according to the target process. The application interface of the application to be preloaded is graphed and displayed according to the active-window launched. As such, it is possible to draw and display the application interface of the application to be preloaded according to the active-window stack for preloading that is outside the coordinate range of the display screen, without interfering with running and display of the foreground application, so as to ensure system stability and, meanwhile, effectively increase the speed of launching the application to be preloaded. When establishing the target process, an initiation procedure of the target process can be included. During execution of the foregoing operations, preloading of other resources can also be involved, such as application service launching, memory allocation, file content reading, network data acquisition, and the like.

In some implementations, the method further includes the following. A notification for forging a focus is sent to the application to be preloaded, and continuous drawing and display update of the application interface of the application to be preloaded is maintained within a preset time period according to the notification for forging a focus. In this way, it is possible to complete drawing and display of the application interface when the application to be preloaded obtains a focus and is visible to the system, and to improve completeness of preloading without interfering with a focus of the foreground application. The "focus" described herein is also referred to as an input focus. A forged focus is independent from the focus of the foreground application. Generally, for the current Android™ system, the focus is unique. For instance, an input operation such as touching is only effective for the focus. The input focus information is the same for a system end and an application end, and once the input focus information is modified at the system end, information indicative of modification of the input focus information will be sent to the application end, so as to ensure the consistency of the input focus information at the system end and the application end. In implementations, by separating the input focus information of the system end and the input focus information of the application end, the purpose of forging the focus at the application end can be achieved. In implementations, while the notification for forging a focus is applied to the application to be preloaded to make the application to be preloaded have focus information, focus information of the system end is still correct. As such, the application to be preloaded can be graphed normally and hence be preloaded completely. The focus exists at the system end and the application end, which can be considered as existing in a server and a client. The system end records an application having a focus and the application end saves a flag to identify whether it has a focus. The input focus can be forged when a window system of Android™ adds a window and needs to update the focus, and then the notification for forging a focus is generated and sent. The focus can be forged by calling the client end of the window to change the focus of the window, whereby the window obtains the focus. As an implementation, the notification for forging a focus can be sent according to the Binder mechanism. The Binder mechanism is most commonly used for inter-process communication in Android™ system, and adopts a c/s architecture, that is, a client/service architecture.

In implementations, the preset time period can be set according to the actual situation. For example, the preset period can be a fixed period after preloading is started, a period from start of preloading to completion of preloading, or the like. In some implementations, duration of the preset period includes play duration of a launched advertisement or a launched animation contained in the application to be preloaded. During launching of some applications, some advertisements or animations may be played and last for three to more than ten seconds. The user may be unable to perform any operation during playing of the advertisements or animations but wait for completion of the playing, which wastes user's valuable time. According to the implementations of the present disclosure, it is possible to complete the playing of the advertisements or animations outside the screen before the application to be preloaded is launched, so that a homepage or other pages of the application operable with the user can be directly entered when the application to be preloaded is launched. In this way, a time point at which the application to be preloaded is operable can be further advanced, thereby reducing waiting time.

In implementations, the method further includes the following after receiving a running instruction for a preloaded application (e.g. when an application to be preloaded has been preloaded, and it can be referred to as a preloaded application), an application interface of a preloaded application included in the active-window stack for preloading is migrated to the display screen for display. As an implementation, the application interface of the preloaded application included in the pre-established active-window stack for preloading is migrated to the display screen for display as follows. A task stack for the preloaded application included in the pre-established active-window stack for preloading is migrated to the top of an application active-window stack. The application interface of the preloaded application is displayed on the display screen by updating size information, configuration information, and visibility of the task stack. In this way, it is possible to ensure stability of migration of the interface and avoid problems such as lag, black screen, low migration speed, or the like during recovery.

In some implementations, the application active-window stack (i.e., Home Stack) refers to a Stack for display of desktop applications.

In some implementations, after the application to be preloaded is determined, a target application interface required by the user can be predicted according to the target information. During preloading, the target application interface of the application to be preloaded is preloaded according to the preloading Stack. When receiving a running instruction for the application to be preloaded, the target application interface is migrated to the display screen for display. In this way, after an application is launched, the user does not need to manually find an interface or function he/she needs, instead, the terminal can directly display the target application interface, which simplifies user operations and makes the terminal more intelligent.

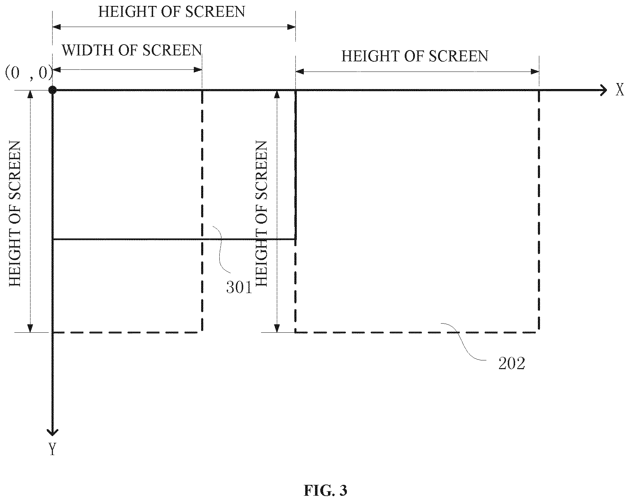

For some terminals, particularly for mobile terminals such as mobile phones and tablet computers, display modes of the display screen usually include a landscape mode and a portrait mode for convenience of the user. While lots of applications are displayed in the portrait mode by default, some other applications are displayed in the landscape mode by default (such as some online games). When the terminal is in use, some applications can switch between the landscape mode and the portrait mode, as the user changes a direction of holding the terminal. In some implementations, the boundary coordinates of the active-window stack for preloading are denoted as (H, 0, 2H, H), the coordinate system corresponding to the boundary coordinates is a system coordinate, the origin of the system coordinate is the upper left corner of the display screen, and H denotes a length of a long side of a display area of the display screen, that is, a side corresponding to H is the longest side of the display area of the display screen, which is the height of the display screen in the portrait mode and the width of the display screen in the landscape mode. In this way, it is possible to take into consideration the landscape mode of the display screen, display of the application preloaded in the landscape mode, and normal display of some applications. FIG. 2 is a diagram illustrating a relative positional relationship between an active-window stack for preloading and a display area of a display screen according to an aspect of the present disclosure. As illustrated in FIG. 2, the display screen is in the portrait mode. The origin of the system coordinate of the terminal is located at a left vertex (0, 0) of the display screen 201. The width direction of the display screen 201 is defined as X-axis, and the height direction is defined as Y-axis. The boundary coordinates of the preloading Stack 202 are denoted as (H, 0, 2H, H), where H denotes the height of the screen, that is, an area within the solid rectangle on the left side is the display area of the display screen, and an area within the dotted rectangle on the right side is the preloading display area. FIG. 3 is a diagram illustrating a relative positional relationship between an active-window stack for preloading and a display area of a display screen according to another aspect of the present disclosure. As illustrated in FIG. 3, the display screen is in the landscape mode. The origin of the system coordinate of the terminal is located at a left vertex (0, 0) of the display screen 301. The height direction of the display screen 301 is defined as X-axis, and the width direction is the defined as Y-axis. The boundary coordinates of the preloading Stack 202 are denoted as (H, 0, 2H, H), where H denotes the height of the screen, that is, an area within the solid rectangle on the left side is the display region of the display screen, and an area within the dotted rectangle on the right side is the preloading display region.

The reasons for which boundaries of the preloading Stack are set as such are as follows.

A horizontal coordinate of the upper left corner is H, which is to prevent the display screen (also called the main screen) from displaying on the interface of the application to be preloaded when the display screen is in a landscape mode. Since the main screen can be in the landscape mode in addition to the portrait mode, in order to prevent the display area of the main screen from displaying part of the preloaded application when the main screen is in the landscape mode, the horizontal coordinate of the upper left corner of the rectangle area corresponding to the preloading Stack is set to be the height of the main screen.

A vertical coordinate of the upper left corner is 0, which is for the application to be preloaded to calculate correctly a height of a status bar. In order to better design a user interface (UI), the Android™ application can customize a top status bar. If the vertical coordinate corresponding to an upper side is not equal to 0, the height of the status bar may be wrong.

A horizontal coordinate of the lower right corner is 2H (twice the height of the screen), that is, a width of a rectangle corresponding to the preloading Stack equals the height of the screen such that the size of the preloading Stack can include a size of a preloaded landscape application (that is, an application with an application interface in the landscape mode).

A vertical coordinate of the lower right corner is H, that is, a height of the rectangle corresponding to the preloading Stack equals the height of the screen so that the size of the preloading Stack can include a size of a preloaded portrait application (that is, an application with an application interface in the portrait mode).

For the reasons above, the size of the preloading Stack is set to be (H, 0, 2H, H).

As an implementation, the application to be preloaded is determined according to the target information as follows. The application to be preloaded is determined according to the target information and current status feature information. The status feature information includes at least one of: time information, date type, on/off status of a mobile data network, connection (e.g. connected/disconnected) status of a wireless hotspot, identity information of a connected wireless hotspot, a previous foreground application, a plug (plugging/unplugging) status of an earphone jack, a charging status, power information of a battery, a display duration of a display screen, a motion status of a mobile terminal, location information, connection (e.g. connected/disconnected) status of Bluetooth, or last screen-off duration. As such, sample elements in training samples can be enriched, and accuracy of application prediction can be improved.

As an implementation, a fourth application prediction model is acquired by training according to a regularity of applications opened after the interactive content appears during an interaction via the preset application with the interactive object within a fourth preset historical period, and according to status feature information when the applications are launched. The interactive object and the current status feature information are input into the fourth application prediction model. The application to be preloaded is determined according to an output of the fourth application prediction model. The fourth application prediction model can be a statistical model or a machine-learning model. An algorithm adopted can include RNN, LSTM networks, GRU, SRU, auto encoder, decision tree, random forest, feature mean classification, classification and regression tree, hidden Markov model, KNN algorithm, logistic regression model, Bayesian model, Gaussian model, KL divergence, and the like.

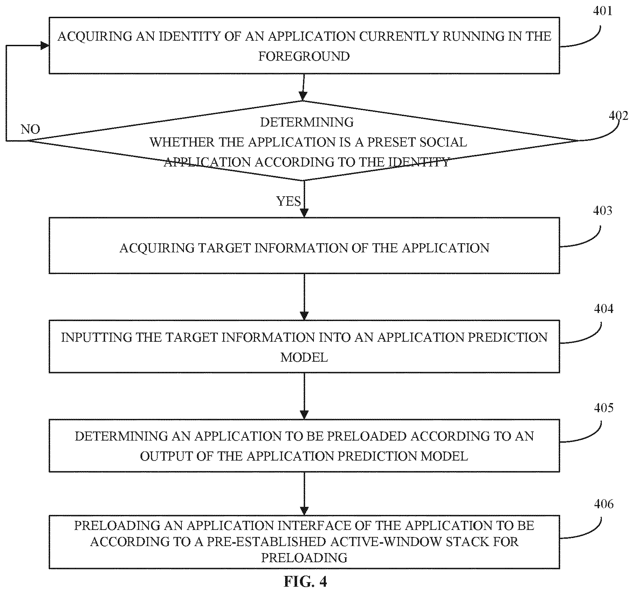

FIG. 4 is a flowchart illustrating a method for preloading an application according to other implementations. The method includes the following.

At block 401, an identity of an application currently running in a foreground is acquired.

As an implementation, the identity is determined according to a process number of the application.

At block 402, determine whether the application is a preset social application according to the identity. If YES, proceed to operations at block 403; otherwise, return to operations at block 401.

As an implementation, an identity list of social applications with a preloading function enabled is read, existence of the acquired application identification in the list is determined, and the foreground application is a preset social application based on a determination that the acquired application identification exists in the list.

At block 403, target information of the application is acquired.

The target information includes an interactive object and interactive content.

At block 404, the target information is input into an application prediction model

At block 405, an application to be preloaded is determined according to an output of the application prediction model.

At block 406, an application interface of the application to be preloaded is preloaded according to a pre-established active-window stack for preloading.

The active-window stack for preloading has boundary coordinates out of a coordinate range of a display screen.

According to the method for preloading an application provided in implementation, when a preset social application is operated by the user, the current interactive object and interactive content of the application are acquired and input into the trained application prediction model, as such an application that is about to be opened by the user can be obtained. The application is determined as the application to be preloaded and an application thereof is preloaded. In this way, when the user actively opens the application, the application interface of the application has been preloaded, and the application interface can be entered quickly, thereby improving launching speed and shorten waiting time of the user.

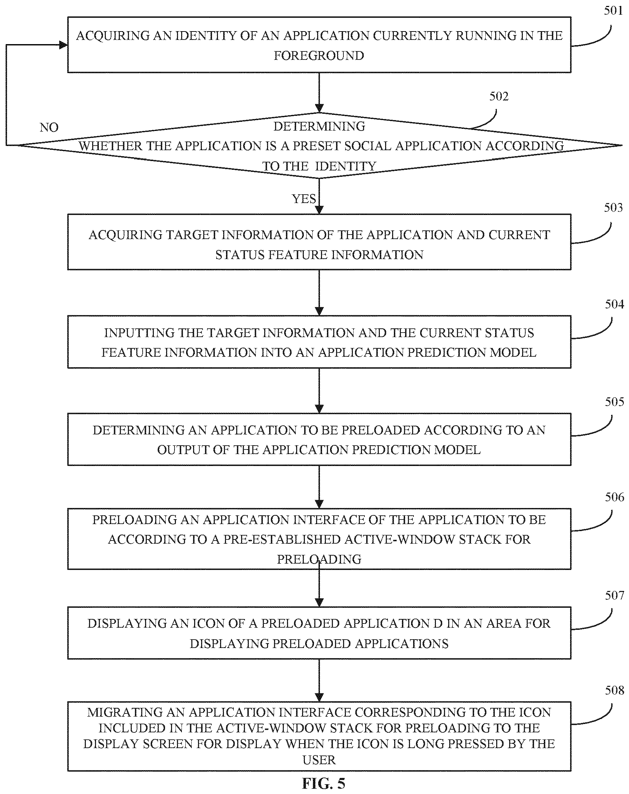

FIG. 5 is a flowchart illustrating a method for preloading an application according to yet other implementations. The method includes the following.

At block 501, an identity of an application currently running in a foreground is acquired.

As an implementation, the identity is determined according to a process number of the application.

At block 502, determine whether the application is a preset social application according to the identity. If YES, proceed to operations at block 503; otherwise, return to operations at block 501.

At block 503, target information of the application and current status feature information are acquired.

The target information includes an interactive object and interactive content.

At block 504, the target information and the current status feature information are input into a preset application prediction model

At block 505, the application to be preloaded is determined according to an output of the application prediction model.

At block 506, an application interface of the application to be preloaded is preloaded according to a pre-established active-window stack for preloading.

The active-window stack for preloading has boundary coordinates out of a coordinate range of a display screen.

At block 507, an icon of a preloaded application is displayed in an area for displaying preloaded applications.

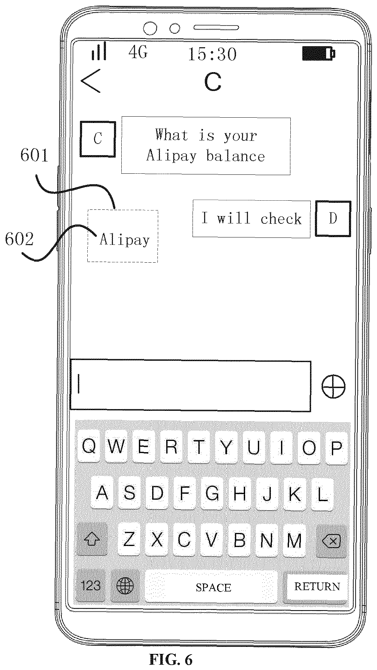

FIG. 6 is a diagram illustrating a display interface of a quick launch entry according to implementations. As illustrated in FIG. 6, taking a mobile phone as an example, user D uses a preset social application in the mobile phone to chat with user C. An area 601 for displaying preloaded applications is set in a blank area of the display screen, which can be displayed in a form of a floating window (e.g. a position of the area 601 can be changed dynamically, and transparency thereof can also be set, for example, in order to avoid blocking chat content, the transparency can be set to 70%). The preloaded application 602 is displayed in the area 601(e.g. the quick launch entry is displayed in a form of an application icon). One preloaded application is illustrated in FIG. 6, and there can be multiple preloaded applications. When N preloaded applications can be displayed at the same time, and there are more than N preloaded applications, these applications can be scrolled to be displayed to control a proportion of the display area of the display screen occupied by the area 601.

At block 508, when the icon is long pressed by the user, an application interface corresponding to the icon included in the active-window stack for preloading is migrated to the display screen for display.

As shown in FIG. 6, after the preloaded application 602 is long pressed, an application interface of preloaded Alipay™ included in the active-window stack (e.g. Stack) for preloading is migrated to the display screen for display.

Further, a balance query interface of Alipay™ can be preloaded. After the preloaded application 602 is long pressed, Alipay™ is laucned, and the preloaded balance query interface is directly migrated to the display screen for display.

According to the method for preloading an application provided in implementation, when a preset social application is operated by the user, the application to be preloaded can be determined according to the interactive object, the interactive content, and the current status feature information. Then the application interface of the application to be preloaded is preloaded and the icon of the preloaded application can be displayed in an interface of the preset social application. In this way, the user can directly open the application from the area for displaying preloaded applications instead of going to the desktop to find the application icon, thereby improving launching speed, and shorten operation time and waiting time of the user.

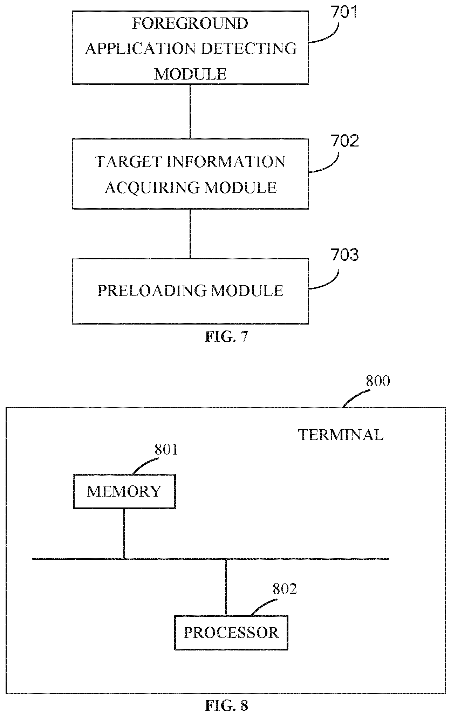

FIG. 7 is a block diagram illustrating an apparatus for preloading an application according to implementations. The apparatus can be implemented with software and/or hardware and can be generally integrated in a terminal. The apparatus can preload an application to-be-launched by executing the method for preloading an application. As illustrated in FIG. 7, the apparatus includes a foreground application detecting module 701, a target information acquiring module 702, and a preloading module 703.

The foreground application detecting module 701 is configured to detect whether a preset application is running in a foreground, where the preset application includes a social application.

The target information acquiring module 702 is configured to acquiring target information of the preset application in response to detecting that the preset application is running in the foreground, the target information being associated with interaction of the preset application.

The preloading module 703 is configured to determine, according to the target information, an application to be preloaded, and preload the application to be preloaded.

With aid of the apparatus for preloading an application provided in implementations, when the preset social application is detected to be running in the foreground, the target information (including at least one of the interactive object and the interactive content) of the preset application is acquired. The application to be preloaded is determined according to the acquired target information and preloaded. By means of the above technical solution, an application that the user is about to open can be predicted according to the interactive objects or interactive content of the social application currently being operated by the user, and preload the predicted application, which will lead to a prediction result with high accuracy and increase launching speed of the application to be preloaded.

As an implementation, the target information includes an interactive object, and the preloading module 703 configured to determine the application to be preloaded according to the target information is configured to: obtain a first application prediction model by training according to a regularity of applications opened during interaction with the interactive object via the preset application within a first preset historical period; input the interactive object into the first application prediction model; determine, according to an output of the first application prediction model, the application to be preloaded.

As an implementation, the target information includes interactive content. The preloading module 703 configured to determine the application to be preloaded according to the target information is configured to one of: identify the interactive content for a preset keyword and determine the application to be preloaded according to the identified preset keyword, where the preset keyword is associated with an application name or an application function; or obtain a second application prediction model by training according to a regularity of applications opened after the interactive content appears during interaction with another user via the preset application within a second preset historical period, input the interactive content into the second application prediction model, and determine, according to an output of the second application prediction model, the application to be preloaded.

As an implementation, the target information includes an interactive object and interactive content, and the preloading module 703 configured to determine the application to be preloaded according to the target information is configured to: obtain a third application prediction model by training according to a regularity of applications opened after the interactive content appears during interaction with the interactive object via the preset application within a third preset historical period; input the interactive object and the interactive content into the third application prediction model; determine, according to an output of the third application prediction model, the application to be preloaded.

As an implementation, the apparatus further includes a launch entry providing module and a launching module.

The launch entry providing module is configured to provide a user with a quick launch entry for a preloaded application after the application to be preloaded is preloaded. The launching module is configured to launch the preloaded application when the quick launch entry is triggered by the user in a preset manner.

As an implementation, the preloading module 703 configured to preload the application to be preloaded is configured to preload, according to a pre-established active-window stack for preloading, an application interface of the application to be preloaded, where the active-window stack for preloading has boundary coordinates out of a coordinate range of a display screen.

As an implementation, the preloading module configured to determine, according to the target information, an application to be preloaded is configured to determine the application to be preloaded according to the target information and current status feature information. The status feature information includes at least one of: time information, date type, on/off status of a mobile data network, connection status of a wireless hotspot, identity information of a connected wireless hotspot, a previous foreground application, a plug status of an earphone jack, a charging status, power information of a battery, a display duration of a display screen, a motion status of a mobile terminal, location information, connection status of Bluetooth, or last screen-off duration.

Implementations of the disclosure also provide a computer-readable storage medium which includes computer executable instructions. The computer executable instructions are configured to execute a method for preloading an application when executed by a computer processor. The method includes the following.

Target information of a preset application is acquired in response to detecting that the preset application is running in a foreground, where the preset application includes a social application, and the target information is associated with interaction of the preset application. An application to be preloaded is determined according to the target information. The application to be preloaded is preloaded.

The storage medium refers to any of various types of memory devices or storage devices. The term "storage medium" is intended to include: a mounting medium such as a compact disc read-only memory (CD-ROM), a floppy disk, or a tape device; a computer system memory or a random access memory such as a dynamic random access memory (DRAM), a double data rate random access memory (DDRRAM), a static random access memory (SRAM), an extended data output random access memory (EDORAM) and a Rambus random access memory (Rambus RAM); a non-transitory memory such as a flash memory and a magnetic medium (such as a hard disk or an optical memory); a register and other similar types of memory elements, and the like. The storage medium can also include other types of memory or a combination thereof. In addition, the storage medium can be located in a first computer system in which a program is executed, or can be located in a second computer system coupled to the first computer system via a network, such as the Internet. The second computer system can provide program instructions to the first computer for execution. The term "storage medium" can include two or more storage media that can reside in different locations (e.g. different computer systems connected through a network). The storage medium can store program instructions which are, for example, implemented as computer programs and are executable by one or more processors.

The computer executable instructions included in the storage medium provided herein are not limited to executing the operations of preloading an application as described above, and can also execute relevant operations of the method for preloading an application according to any of the implementations of the disclosure.

Implementations provide a terminal, into which the apparatus for preloading an application provided herein can be integrated. FIG. 8 is a block diagram illustrating a terminal according to implementations. The terminal 800 includes a memory 801, a processor 802, and computer programs stored in the memory 801 and executed by the processor 802. The processor 802 is configured to execute the computer programs to execute the method for preloading an application according to implementations.

According to the terminal provided herein, an application that the user is about to open can be predicted according to the interactive object or interactive content of the social application currently being operated by the user, and preload the predicted application, which will lead to a prediction result with high accuracy and increase launching speed of the application to be preloaded.

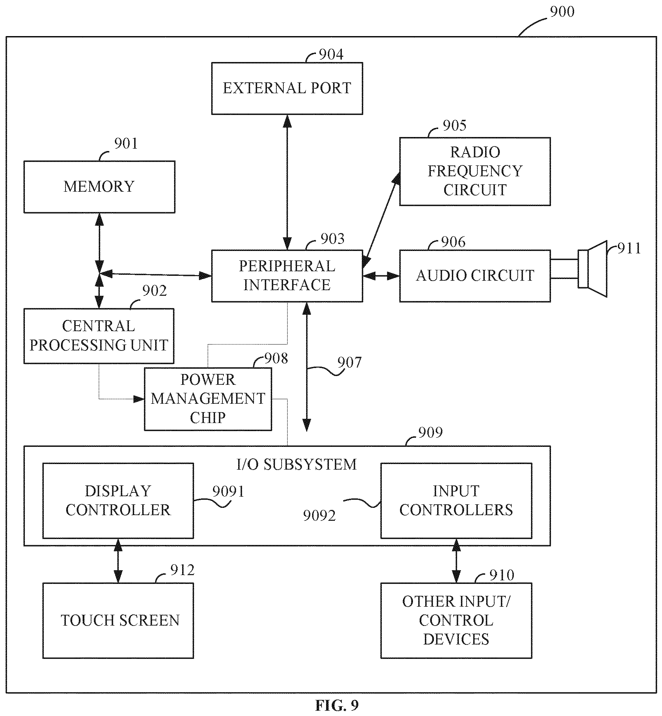

FIG. 9 is a block diagram illustrating another terminal according to implementations. The terminal includes a housing (not illustrated), a memory 901, and a central processing unit (CPU) 902 (also referred to as a processor, hereinafter CPU for short), a circuit board (not illustrated), and a power supply circuit (not illustrated). The circuit board is disposed inside a space defined by the housing. The CPU 902 and the memory 901 are disposed on the circuit board. The power supply circuit is configured to supply power to each circuit or component of the terminal. The memory 901 is configured to store executable program codes. The CPU 902 is configured to run a computer program corresponding to the executable program codes by reading the executable program codes stored in the memory 901 to carry out the following operations.

Target information of a preset application is acquired in response to detecting that the preset application is running in a foreground, where the preset application includes a social application, and the target information is associated with interaction of the preset application. An application to be preloaded is determined according to the target information. The application to be preloaded is preloaded.

The terminal further includes a peripheral interface 903, a radio frequency (RF) circuit 905, an audio circuit 906, a speaker 911, a power management chip 908, an input/output (I/O) subsystem 909, other input/control devices 910, a touch screen 912, other input/control devices 910, and an external port 904, which communicate with each other via one or more communication buses or signal lines 907.

It should be understood that, the terminal 900 illustrated is just exemplary and the terminal 900 can have more or fewer components than those illustrated in FIG.9. For example, two or more components can be combined, or different component configurations can be adopted in the terminal. The various components illustrated in FIG. 9 can be implemented in hardware, software, or a combination thereof including one or more signal processing and/or application specific integrated circuits.

The following describes a mobile phone as an example of the terminal for preloading an application.

The memory 901 is accessible to the CPU 902, the peripheral interface 903, and so on. The memory 901 can include a high-speed random access memory and can further include a non-transitory memory such as one or more magnetic disk storage devices, flash memory devices, or other transitory solid-state memory devices.

The peripheral interface 903 is configured to connect the input and output peripherals of the device to the CPU 902 and the memory 901.

The I/O subsystem 909 is configured to connect the input and the output peripherals such as the touch screen 912 and other input/control devices 910 to the peripheral interface 903. The I/O subsystem 909 can include a display controller 9091 and one or more input controllers 9092 configured to control other input/control devices 910. The one or more input controllers 9092 are configured to receive electrical signals from or send electrical signals to other input/control devices 910, where other input/control devices 910 can include a physical button (a press button, a rocker button, etc.), a dial, a slide switch, a joystick, or a click wheel. It should be noted that the input controller 9092 can be coupled with any of a keyboard, an infrared port, a universal serial bus (USB) interface, and a pointing apparatus such as a mouse.

The touch screen 912 functions as an input interface and an output interface between a terminal and a user, and is configured to display a visual output to the user. The visual output can include graphics, text, icons, videos, and the like.

The display controller 9091 in the I/O subsystem 909 is configured to receive an electrical signal from or send an electrical signal to the touch screen 912. The touch screen 912 is configured to detect contact on the touch screen. The display controller 9091 is configured to convert the contact detected into an interaction with a user interface object displayed on the touch screen 912, that is, to realize human-computer interaction. The user interface object displayed on the touch screen 912 can be an icon of a running game, an icon indicating connection to corresponding networks, and the like. It should be noted that, the device can also include a light mouse, which is a touch-sensitive surface that does not display a visual output, or can be an extension of a touch-sensitive surface formed by the touch screen.

The RF circuit 905 is configured to establish communication between a mobile phone and a wireless network (i.e. network side), to transmit and receive data between the mobile phone and the wireless network, such as transmitting and receive short messages, emails, and the like. The RF circuit 905 is configured to receive and transmit RF signals (also known as electromagnetic signals), to convert an electrical signal into an electromagnetic signal or convert an electromagnetic signal into an electrical signal, and to communicate with a communication network and other devices through electromagnetic signals. The RF circuit 905 can include known circuits for performing these functions, including but not limited to an antenna system, an RF transceiver, one or more amplifiers, a tuner, one or more oscillators, a digital signal processor, a coder-decoder (CODEC) chipset, a subscriber identity module (SIM), and so on.

The audio circuit 906 is configured to receive audio data from the peripheral interface 903, to convert the audio data into an electrical signal, and to transmit the electrical signal to the speaker 911.

The speaker 911 is configured to restore the voice signal received by the mobile phone from the wireless network via the RF circuit 905 to sound and to play the sound to the user.

The power management chip 908 is configured for power supply and power management of the hardware connected to the CPU 902, the I/O subsystem 909, and the peripheral interfaces 903.

The apparatus for preloading an application, the storage medium, and the terminal of the above implementations can execute the method for preloading an application of any of the above implementations and have corresponding functional modules and advantages of executing the method. For technical details not described herein, reference can be made to the description of the method for preloading an application.

The above are only some implementations of the present disclosure and the technical principles applied thereto. Those skilled in the art will appreciate that the present disclosure is not limited to the implementations described herein, and that various changes, modifications, and substitutions can be made by those skilled in the art without departing from the scope of the disclosure. Therefore, while the disclosure has been described in connection with certain implementations, it is to be understood that the disclosure is not to be limited to the disclosed implementations but, on the contrary, is intended to cover various equivalent arrangements included within the scope of the disclosure. The scope of the disclosure is determined by the scope of the appended claims.

## Claims

1. A method for preloading an application, comprising:
acquiring target information of a preset application in response to detecting that the preset application is running in a foreground, wherein the preset application comprises a social application, and the target information is associated with interaction of the preset application;
determining, according to the target information, an application to be preloaded; and
preloading the application to be preloaded.

2. The method of claim 1, wherein the target information comprises an interactive object, and determining, according to the target information, the application to be preloaded comprises:
obtaining a first application prediction model by training according to a regularity of applications opened during interaction with the interactive object via the preset application within a first preset historical period;
inputting the interactive object into the first application prediction model; and
determining, according to an output of the first application prediction model, the application to be preloaded.

3. The method of claim 1, wherein the target information comprises interactive content, and determining, according to the target information, the application to be preloaded comprises one of:
identifying the interactive content for a preset keyword and determining the application to be preloaded according to the identified preset keyword, wherein the preset keyword is associated with an application name or an application function; or
obtaining a second application prediction model by training according to a regularity of applications opened after the interactive content appears during interaction with another user via the preset application within a second preset historical period, inputting the interactive content into the second application prediction model, and determining, according to an output of the second application prediction model, the application to be preloaded.

4. The method of claim 1, wherein the target information comprises an interactive object and interactive content, and determining, according to the target information, the application to be preloaded comprises:
obtaining a third application prediction model by training according to a regularity of applications opened after the interactive content appears during interaction with the interactive object via the preset application within a third preset historical period;
inputting the interactive object and the interactive content into the third application prediction model; and
determining, according to an output of the third application prediction model, the application to be preloaded.

5. The method of any of claims 1 to 4, further comprising after preloading the application to be preloaded:
providing a user with a quick launch entry for a preloaded application; and
launching the preloaded application when the quick launch entry is triggered by the user in a preset manner.

6. The method of claim 1, wherein preloading the application to be preloaded comprises:
preloading, according to a pre-established active-window stack for preloading, an application interface of the application to be preloaded, wherein the active-window stack for preloading has boundary coordinates out of a coordinate range of a display screen.

7. The method of claim 6, wherein preloading, according to the pre-established active-window stack for preloading, the application interface of the application to be preloaded comprises:
determining existence of the pre-established active-window stack for preloading;
establishing the active-window stack for preloading according to a preset principle based on a determination that the pre-established active-window stack for preloading is absent; and
preloading, according to the established active-window stack for preloading, the application interface of the application to be preloaded.

8. The method of claim 6, wherein preloading the application interface of the application to be preloaded according to the pre-established active-window stack for preloading comprises:
establishing a target process for the application to be preloaded;
establishing a task stack for the application to be preloaded in the pre-established active-window stack for preloading;
launching, according to the target process, an active-window corresponding to the application to be preloaded in the task stack; and
graphing and displaying the application interface of the application to be preloaded according to the active-window launched.

9. The method of claim 6, further comprising:
migrating an application interface of a preloaded application comprised in the active-window stack for preloading to the display screen for display.

10. The method of claim 9, wherein migrating the application interface of the preloaded application comprised in the pre-established active-window stack for preloading to the display screen for display comprises:
migrating a task stack for the preloaded application comprised in the pre-established active-window stack for preloading to the top of an application active-window stack; and
displaying the application interface of the preloaded application on the display screen by updating size information, configuration information, and visibility of the task stack.

11. The method of claim 1, further comprising:
predicting a target application interface required by a user according to the target information; and
migrating the target application interface to a display screen for display in response to receiving an instruction for launching the application to be preloaded.

12. The method of claim 1, wherein determining, according to the target information, the application to be preloaded comprises:
determining the application to be preloaded according to the target information and current status feature information;
wherein the status feature information comprises at least one of: time information, date type, on/off status of a mobile data network, connection status of a wireless hotspot, identity information of a connected wireless hotspot, a previous foreground application, a plug status of an earphone jack, a charging status, power information of a battery, a display duration of a display screen, a motion status of a mobile terminal, location information, connection status of Bluetooth, or last screen-off duration.

13. The method of claim 12, wherein the target information comprises an interactive object and interactive content; and determining the application to be preloaded according to the target information and the current status feature information comprises:
acquiring a fourth application prediction model by training according to a regularity of applications opened after the interactive content appears during an interaction via the preset application with the interactive object within a fourth preset historical period, and status feature information when the applications are launched;
inputting the interactive object and the current status feature information into the fourth application prediction model; and
determining, according to an output of the fourth application prediction model, the application to be preloaded.

14. The method of claim 1, further comprising:
acquiring an identity of an application currently running in the foreground;
determining whether the application is a preset social application according to the identity; and
proceeding to the acquiring of the target information of the application based on a determination that the application is the preset social application.

15. The method of claim 14, further comprising:
returning to the acquiring of the identity of the application currently running in the foreground based on a determination that the application is not the preset social application.

16. The method of claim 1, further comprising:
sending a notification for forging a focus to the application to be preloaded, and according to the notification for forging a focus, maintaining continuous drawing and display update of the application interface of the application to be preloaded within a preset time period.

17. An apparatus for preloading an application, comprising:
a foreground application detecting module configured to detect whether a preset application is running in a foreground, the preset application comprising a social application;
a target information acquiring module configured to acquiring target information of the preset application in response to detecting that the preset application is running in the foreground, the target information being associated with interaction of the preset application; and
a preloading module configured to determine, according to the target information, an application to be preloaded, and preload the application to be preloaded.

18. The apparatus of claim 17, further comprising:
a launch entry providing module configured to provide a user with a quick launch entry for a preloaded application after the application to be preloaded is preloaded;
a launching module configured to launch the preloaded application when the quick launch entry is triggered by the user in a preset manner.

19. A computer-readable storage medium storing computer programs which, when executed by a processor, are operable with the processor to execute the method for preloading an application of any of claims 1-16.

20. A terminal comprising a memory, a processor, and computer programs which are stored in the memory, which, when executed by the processor, are operable with the processor to execute the method for preloading an application of any of claims 1-16.
